Europäisches Patentamt

European Patent Office

Office européen des brevets

(19)

(11) Numéro de publication : **0 515 253 B1**

(12)

# FASCICULE DE BREVET EUROPEEN

(45) Date de publication du fascicule du brevet :
**12.07.95 Bulletin 95/28**

(51) Int. Cl.$^6$ : **G06F 15/16**

(21) Numéro de dépôt : **92401341.0**

(22) Date de dépôt : **15.05.92**

(54) **Procédé pour déterminer automatiquement la configuration d'un réseau.**

(30) Priorité : **15.05.91 FR 9105886**

(43) Date de publication de la demande :
**25.11.92 Bulletin 92/48**

(45) Mention de la délivrance du brevet :
**12.07.95 Bulletin 95/28**

(84) Etats contractants désignés :
**AT BE CH DE ES FR GB IT LI NL SE**

(56) Documents cités :
**EP-A- 0 221 360
EP-A- 0 242 765
WO-A-85/01850
AFIPS CONFERENCE PROCEEDING 1982 7
Juin 1982, HOUSTON, TEXAS, USA C DAVIS:
'Reconfigurable multicomputer networks for
very fast real-time application'
IEEE TRANSACTIONS ON COMPUTERS. vol.
C-36, no. 7, 1987, NEW YORK US S.P. KARTAS-
HEV: 'Analysis and synthesis of dynamic multicomputer networks that configure into rings,
trees and stars'**

(73) Titulaire : **ALCATEL N.V.
Strawinskylaan 341,
(World Trade Center)
NL-1077 XX Amsterdam (NL)**

(84) **BE CH DE ES GB IT LI NL SE AT**
Titulaire : **Société Anonyme " OPTICABLE"
19, rue du Luxembourg
B-1000 Bruxelles (BE)**

(84) **FR**

(72) Inventeur : **De Win, Paul, c/o Opticable
19, rue du Luxembourg
B-1000 Bruxelles (BE)**

(74) Mandataire : **Sciaux, Edmond et al
c/o SOSPI,
14-16 rue de la Baume
F-75008 Paris (FR)**

## Description

Procédé pour déterminer automatiquement la configuration d'un réseau.

L'invention concerne un procédé pour déterminer automatiquement la configuration d'un réseau. La détermination de la configuration d'un réseau consiste à déterminer quelles stations sont présentes dans le réseau et quelles sont les liaisons établies entre ces stations. Chaque stations constitue un noeud du réseau. Chaque station comporte au moins un port et chaque port est constitué d'une entrée et d'une sortie. La détermination de la configuration est indispensable pour gérer un réseau ayant une structure plus complexe qu'une structure bus, c'est-à-dire : une structure multi-points à point, en forme d'arbre ou d'étoile; ou une structure en anneau; ou bien encore une structure combinant ces différentes structures élémentaires. La connaissance de la configuration du réseau, par chacun des noeuds de ce réseau, permet notamment de déterminer une route pour transmettre des données d'un noeud vers un autre noeud, par l'intermédiaire éventuellement d'un ou de plusieurs noeuds.

La demande de brevet international WO 85/01850 décrit un procédé pour configurer automatiquement un ensemble de stations ayant des liaisons de forme quelconque, pour constituer un réseau en forme d'anneau, tout au moins du point de vue logique. Une station quelconque lance un processus de test de tous ses ports, puis ce processus de test est réitéré dans toutes les autres stations, de proche en proche. Dans chaque station un algorithme simple fixe l'ordre dans lequel les ports sont testés. Au fur et à mesure du test, des connections sont établis à l'intérieur de chaque station, entre les ports de cette station. Finalement tous les ports sont connectés de telle sorte que les liaisons entre les stations forment, du point de vue logique, un bus en forme d'anneau plus ou moins replié.

L'inconvénient de ce procédé de configuration est la complexité du chemin que doit parcourir un message pour aller d'une station expéditrice vers une station destinataire, lorsque l'anneau est replié plusieurs fois pour passer dans toutes les stations, alors que celles-ci possèdent des liaisons qui sont mal adaptées pour constituer un anneau. Une telle configuration fonctionne donc avec lenteur si la forme des liaisons est mal adaptée pour constituer un bus en anneau.

Le but de l'invention est de proposer un procédé permettant de déterminer automatiquement la configuration d'un réseau.

L'objet de l'invention est un procédé permettant de déterminer automatiquement la configuration d'un réseau comportant une station maître et une pluralité de noeuds, chaque noeud comportant au moins un port relié à au moins un port d'un autre noeud, un port de la station maître étant relié à un port de l'un des noeuds, ou bien la station maître étant intégrée à l'un des noeuds; consistant à :
- tester successivement chaque port de tous les noeuds, chaque port n'étant testé qu'une seule fois;
- déterminer un ordre hiérarchique des noeuds, permettant d'acheminer des messages de noeud en noeud selon un chemin déterminé;
    caractérisé en ce que pour tester successivement chaque port, il consiste à :
- envoyer un message de test de la station maître à ce port;
- déterminer les identités des noeuds qui sont reliés directement au port testé;
- déterminer l'identité des ports que possède ces noeuds;
    et en ce que pour déterminer un ordre hiérarchique des noeuds, il consiste en outre à :
- envoyer du noeud possèdant le port testé vers la station maître, en suivant l'ordre hiérarchique des noeuds déjà déterminés, un message contenant les identités des noeuds et des port qui ont été déterminés en testant ce port;
- mémoriser ces identités, d'une part dans la station maître, et, d'autre part, dans les stations qui sont traversées par ce message pendant son acheminement vers la station maître;
- et en déduire, dans chaque noeud, un sous-réseau en forme d'arbre ayant pour racine le noeud qui possède le port testé.

Le procédé ainsi caractérisé permet d'identifier tous les ports et donc tous les noeuds d'un réseau, quelle que soit sa forme, à partir d'un noeud quelconque. Il permet en outre de connaître les liaisons entre un noeud donné et d'autres noeuds, en fournissant l'identité de chaque noeud qui est relié au noeud donné. En outre, il permet de distinguer des liaisons privilégiées en déterminant un ordre hiérarchique des noeuds. Ces liaisons privilégiées consitueront des artères principales pour la gestion du réseau et les transferts de données. Elles sont utilisables tout d'abord pour acheminer des messages de test et des messages de réponse pendant la procédure de configuration, puis pour acheminer des messages quelconques pendant le fonctionnement normal du réseau. L'ordre hiérarchique des noeuds permet de déterminer un chemin unique pour router un message d'un noeud à un autre noeud.

Selon une autre caractéristique :

- si le port testé est le port recevant le message de test, il consiste en outre à envoyer du noeud possédant le port testé vers la station maître un message de réponse contenant un premier marqueur;
- si le port testé n'est pas le port recevant le message de test, il consiste en outre à :
  -- envoyer un message d'interrogation du port testé vers un noeud appellé noeud interrogé, qui est un noeud relié au moins par une liaison allant directement du port testé au noeud interrogé; le noeud possédant le port étant considéré comme le supérieur hiérarchique immédiat du noeud interrogé si ce dernier n'a pas été déjà pris en compte dans la configuration;
  -- si le noeud interrogé a déjà pris en compte dans la configuration, émettre un message de réponse adressé au noeud possédant le port testé, ce message contenant un deuxième marqueur et l'identité du port ayant reçu le message d'interrogation;
  -- si le noeud interrogé n'a pas déjà été pris en compte dans la configuration :
    --- lancer, dans le noeud interrogé un temporisateur pour indiquer que ce noeud a été pris en compte dans la configuration;
    --- mémoriser un troisième marqueur et l'identité du noeud possédant le port testé, dans le noeud interrogé, dans une mémoire propre au port ayant reçu le message d'interrogation, pour repérer le port qui conduit à tous les supérieurs hiérarchiques, et pour mémoriser l'identité du supérieur hiérarchique immédiat du noeud interrogé;
    --- émettre un message de réponse, à partir du noeud interrogé, adressé au noeud testé et contenant l'identité de chaque du noeud interrogé;
      et en ce que, dans tous les cas, il consiste en outre à :
    - acheminer le message de réponse du noeud interrogé au noeud possédant le port testé, via des noeuds intermédiaires éventuellement, chaque noeud intermédiaire réémettant le message de réponse par le port où il l'a reçu;
    - mémoriser au moins en partie, dans une mémoire propre au port testé, le contenu du message de réponse du noeud interrogé, pour repérer le port qui conduit au noeud testé;
    - émettre un message de réponse, à partir du noeud testé, adressé en général au supérieur hiérarchique immédiat du noeud testé, en vue de le faire parvenir à la station maître, le contenu de ce message de réponse étant fonction du contenu du message de réponse envoyé par le noeud interrogé;
    - acheminer ce message de réponse jusqu'à la station maître, via des noeuds déjà pris en compte dans la configuration, chacun de ces noeuds réémettant le message en l'adressant en général à son supérieur hiérarchique immédiat et en mémorisant au passage l'identité du noeud interrogé, déduite de l'identité des ports contenue dans ce message de réponse, sauf lorsque cette identité est remplacée par le premier marqueur ou est acccompagnée du deuxième marqueur.

Le procédé ainsi caractérisé permet de repérer dans chaque noeud le port qui conduit à tout noeud supérieur hiérarchique, au moyen du premier marqueur. Il permet de connaître aussi, dans chaque noeud, quel est le supérieur hiérarchique immédiat; et quels sont les noeuds qui sont les inférieurs hiérarchiques.

Enfin, ce procédé permet de minimiser le nombre de tests de ports et donc le temps nécessaire pour la détermination de la configuration, en distinguant par le deuxième marqueur, dans les messages de réponse, les identités des ports d'un noeud ayant déjà été pris en compte, pour éviter des "retours en arrière" dans la progression du test des noeuds.

Le troisième marqueur permet à la station maître de savoir que le port testé est parmi, les port du même noeud, celui qui communique avec elle. Ce port ne permet pas de connaître de nouveaux noeuds.

L'ordre hiérarchique des noeuds peut être représenté par un arbre. Les noeuds qui sont pris en compte le plus tôt sont situés près de la racine de l'arbre, qui est constituée par la station maître; et leur rang hiérarchique est dit supérieur à celui des noeuds qui sont pris en compte plus tard dans la configuration. Chaque branche représente une possibilité de liaison entre deux noeuds. Selon les réseaux, cette possibilité de liaison est bidirectionnelle ou monodirectionnelle, et elle peut être procurée par une liaison physique directe ou par une série de liaisons physiques via des noeuds utilisés comme intermédiaires. Chaque fois qu'un port est testé et qu'il répond en donnant l'identité des ports d'un autre noeud, l'arbre peut être prolongé à condition que ce noeud ne soit pas déjà pris en compte dans la configuration. Dans le cas contraire, la liaison n'est pas une liaison privilégiée pour constituer une branche. La distance, comptée en nombre de noeuds, entre la station maître et un noeud quelconque, est donc minimale sur cet arbre.

Le procédé consiste notamment à mémoriser, dans une mémoire propre au port testé, une partie du message de réponse envoyé par le noeud interrogé au port testé. Ce dernier sait ainsi acheminer un message vers le noeud testé. Si le noeud interrogé n'a pas été déjà pris en compte auparavant, ce chemin est conforme à l'ordre hiérarchique. S'il a déjà été pris en compte, ce chemin n'est pas conforme à l'ordre hiérarchique, mais il constitue un "raccourci" avantageux dans tous les cas où un message est à transmettre entre ces deux noeuds, puisque leur liaison directe est forcément plus courte que le chemin conforme à l'ordre hiérarchique.

La réponse envoyée par un port testé, vers la station maître, transite généralement par des noeuds intermédiaires selon l'ordre hiérarchique, en général. Chaque noeud intermédiaire peut donc connaître cette réponse et l'inscrire, au moins partiellement, dans une mémoire, pour déterminer un "mini-arbre" dont la racine est constituée par le noeud intermédiaire considéré. Ce mini-arbre est une partie de l'arbre déterminé par la station maître.

Quand la détermination de la configuration est finie, l'arbre définit un chemin unique, et de longueur minimale, pour échanger des informations entre la station maître et un noeud quelconque. Chaque mini-arbre définit un chemin unique et de longueur minimale, pour échanger des informations entre le noeud qui est la racine de ce mini-arbre et tout autre noeud constituant ce mini-arbre. Le noeud qui est la racine de ce mini-arbre peut aussi échanger des informations avec tout autre noeud qui n'est pas dans son mini-arbre, par les liaisons qui constituent le reste de l'arbre. Cependant ce chemin n'a pas toujours une longueur minimale.

Le chemin est, en principe, une voie hiérarchique. Un message à acheminer d'un noeud expéditeur vers un noeud destinataire qui n'est pas dans son mini-arbre, est acheminé vers des noeuds de plus en plus hauts dans la hiérarchie, jusqu'à ce ce que le message trouve un noeud qui sache l'acheminer vers le noeud destinataire, c'est-à-dire qui ait l'identité du noeud destinataire parmi les identités de noeud stockées dans les mémoires associées respectivement à ses ports.

Le procédé selon l'invention peut être utilisé comme élément d'un système de gestion de réseau. Si un noeud peut être atteint par au moins deux chemins, le procédé selon l'invention permet de redéterminer une configuration en cas de défaillance d'une liaison sur l'un de ces chemins, pour maintenir l'accès au noeud victime de cette défaillance.

L'invention sera mieux comprise et d'autres caractéristiques apparaîtront à l'aide de la description ci-dessous et des figures l'accompagnant :
- la figure 1 représente schématiquement un exemple de réseau multi-points à point;
- la figure 2 illustre un exemple de mise en oeuvre du procédé selon l'invention, pour le réseau représenté sur la figure 1;
- la figure 3 illustre un exemple de mise en oeuvre du procédé selon l'invention, pour le réseau représenté sur la figure 1, dans le cas où une nouvelle détermination de la configuration est demandée à la suite de l'interruption d'une liaison;
- la figure 4 représente schématiquement un exemple de réseau en anneau;
- la figure 5 illustre un exemple de mise en oeuvre du procédé selon l'invention, pour l'exemple de réseau représenté sur la figure 4;
- la figure 6 représente schématiquement un exemple de réseau mixte, qui est un mélange de multi-points à point et d'anneaux;
- la figure 7 illustre un exemple de mise en oeuvre du procédé selon l'invention, pour l'exemple de réseau mixte représenté sur la figure 6.

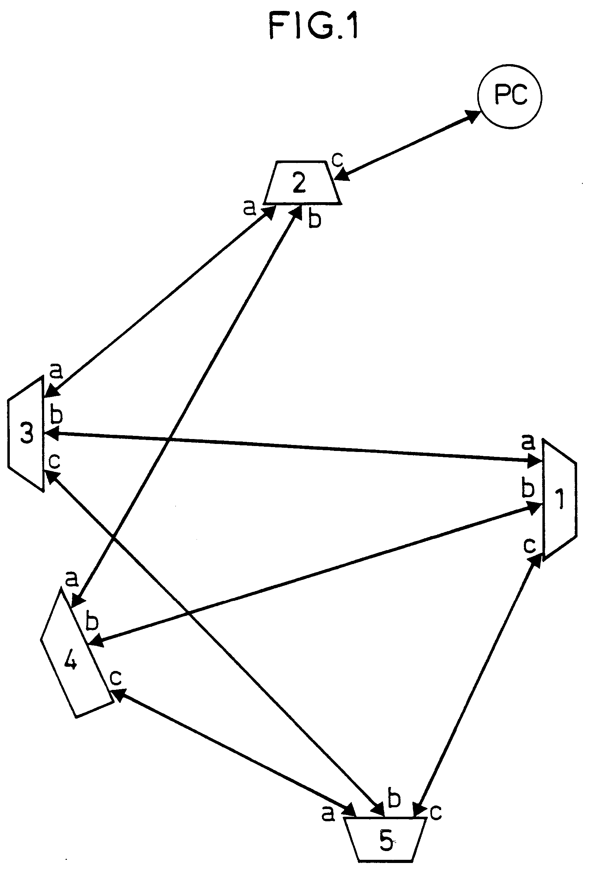

A titre d'exemple, le réseau multi-points à point représenté sur la figure 1 est un réseau informatique et comporte une station maître et cinq noeuds constitués de machines informatiques quelconques, chacune comportant notamment un processeur, une mémoire de programme, et une mémoire vive. Les noeuds sont repérés par des numéros, 1 à 5, et la station maître est référencée PC. La station maître peut être un micro-ordinateur, un gros ordinateur, ou un modem reliant ce réseau à un autre réseau. Chaque noeud comporte trois ports dans cet exemple. Chaque port constitue une entrée-sortie et est désigné par le numéro du noeud et une lettre. Par exemple, les ports du noeud 2 sont désignés par : 2a, 2b, 2c. Chaque liaison est bidirectionnelle, et chaque port est relié à un seul port, dans cet exemple.

La station maître PC exécute un programme de configuration automatique, mettant en oeuvre le procédé selon l'invention. Dans une première étape, la station maître PC se comporte comme un port qui est testé. Elle envoie un message d'interrogation au noeud qui lui est relié, pour déterminer l'identité de ce noeud et l'identité des ports que possède ce noeud. Dans une seconde étape, la station maître interroge successivement tous les ports dont elle connaît déjà l'existence, c'est-à-dire les ports du noeud 2, en leur envoyant un message dit de test.

Un port qui est testé effectue une procédure d'interrogation sur la liaison qu'il possède. Cette procédure consiste à : envoyer sur cette liaison un message dit d'interrogation; puis attendre un message de réponse pendant un délai fixé. Dans sa réponse, le noeud interrogé donne l'identité de tous les ports qu'il possède. Dans le cas où la liaison est bidirectionnelle, comme c'est le cas pour toutes les liaisons dans cet exemple, la réponse revient évidemment sur la même liaison. Le cas des liaisons unidirectionnelles sera décrit plus loin.

Plus la station maître PC teste de ports , et plus elle découvre de nouveaux ports, jusqu'à ce que tous les ports actifs dans le réseau ait été pris en compte dans la configuration. Dans cet exemple, chaque fois qu'un port est testé il répond qu'il est relié à un noeud comportant trois ports. La station maître découvre donc trois

EP 0 515 253 B1

nouveaux ports à tester ultérieurement, sauf si le noeud a déjà été interrogé antérieurement, à partir d'un autre port testé.

Les messages de test, les messages d'interrogation, et les messages de réponse comportent chacun : une adresse de noeud destinataire, qui permet à chaque noeud de les router convenablement, et une adresse de noeud expéditeur. Un noeud utilisé comme intermédiaire ne modifie pas l'identité de l'expéditeur d'origine, avant de réémettre le message. Un noeud qui est destinataire d'un message mais qui réémet ce message vers un autre noeud, met son identité comme adresse d'expéditeur à la place de celle de l'expéditeur d'origine. Les messages de test, les messages d'interrogation, et les messages de réponse ont des adresses et des contenus respectivement différents qui permettent à chaque noeud de les distinguer et de les router en fonction de leur type. En particulier, un message de réponse envoyé par le noeud testé à son supérieur hiérarchique, en vue de le faire parvenir à la station maître PC, est reconnu comme tel par le supérieur hiérarchique par le fait que son temporisateur est lancé, et par le contenu du message : identités de port et marqueur éventuels. le supérieur hiérarchique en déduit donc qu'il doit le réémettre en l'adressant à son propre supérieur hiérarchique.

Dans cet exemple, le noeud qui est relié à la station maître envoie un message de réponse qui contient : 2a, 2b, 2c. Cette réponse indique à la station maître PC qu'elle est reliée au noeud 2 et que celui-ci possède 3 ports : 2a, 2b, 2c. La station centrale PC inscrit chaque identité de port, constituant la réponse du noeud 2, dans une mémoire, à une adresse pointée par un premier pointeur fournissant une adresse appelée adresse d'écriture de réponse. Le premier pointeur, est incrémenté pour chaque identité de port ou chaque marqueur contenu dans une réponse.

Un temporisateur incorporé au noeud 2 est lancé lorsque le noeud 2 reçoit le message d'interrogation. Ce temporisateur mémorise que le noeud 2 a été pris en compte dans la configuration. Le temporisateur fournit un marqueur e pendant une durée prédéterminée, en réponse à toute nouvelle interrogation. Le noeud 2 constate qu'il a reçu un message d'interrogation, par son port 2c. Il mémorise ce fait en inscrivant un marqueur : 0, dans une mémoire vive propre au port 2c. Il sait désormais par quel port il doit acheminer un message devant remonter la hiérarchie des noeuds. Le noeud 2 mémorise en outre l'identité du noeud qui a émis le message d'interrogation. Le message d'interrogation avait donc pour adresse d'expéditeur : PC. Par conséquent, le noeud 2 mémorise l'identité PC dans la mémoire propre au port 2c, en plus du marqueur 0. Il sait désormais par quel port il doit acheminer un message dont l'adresse de destinataire est PC.

Au cours d'une seconde étape, le programme va tester tous les ports donc l'existence est connue, c'està-dire ceux du noeud 2, pour le moment. Un second pointeur fournit une adresse appelée adresse de port à tester. Il est incrémenté chaque fois qu'un port testé a fini de transmettre la réponse du noeud interrogé à la station maître. Le second pointeur rebalaye la suite d'adresses de la mémoire, de façon à tester successivement tous les ports ayant été signalés dans les réponses que les ports ont envoyées, à l'exception de ceux déjà testés.

La station maître va donc, tout d'abord, tester le port 2a pour déterminer quel noeud lui est relié et quels sont les ports de ce noeud. Le port 2a envoie un message d'interrogation sur la liaison qu'il possède, et il reçoit pour réponse : 3a, 3b, 3c. Cette réponse signifie : un noeud 3 est relié au port 2a, et ce noeud 3 possède trois ports : 3a, 3b, 3c. La réponse du noeud interrogé, 3, est réémise du noeud 2 qui possède le port testé, 2a, vers son supérieur hiérarchique immédiat, en vue de la faire parvenir jusqu'à la station maître PC, en suivant la voie hiérarchique.

Le supérieur hiérarchique est déterminé en cherchant le marqueur 0 dans les mémoires propres aux ports du noeud 2, puis en prenant l'identité de port qui suit immédiatement le marqueur 0 dans la même mémoire. Cette identité est : PC. Le message de réponse est réémis par le noeud 2 après avoir remplacé 2 par PC dans l'adresse de destinataire. Pour le noeud 2, la réponse arrive à la station maître PC en une seule étape, car il n'y a pas d'échelon hiérarchique intermédiaire entre le noeud 2 et la station maître PC. La réponse 3a, 3b, 3c est inscrite intégralement dans la mémoire de la station centrale, à trois adresses successivement pointées par le pointeur d'adresse d'écriture de réponse. Cette réponse est mémorisée partiellement dans le noeud 2. Le noeud 2 inscrit, dans une mémoire propre au port 2a, le numéro du noeud qui a répondu : 3, qui est extrait des identités de port, 3a, 3b, 3c. Le noeud 2 sait désormais par quel port il peut acheminer un message vers le noeud 3. Le fait que le noeud 3 a reçu un message d'interrogation par le port 3a est mémorisé dans la mémoire propre à ce port 3a en y inscrivant un marqueur 0. Le noeud 3 sait ainsi qu'il peut acheminer par ce port un message qui doit remonter l'ordre hiérarchique.

Le fait que le message d'interrogation avait 2 pour adresse d'expéditeur est mémorisé aussi dans la mémoire propre au port 3a en y inscrivant en outre : 2. Le noeud 3 sait ainsi que le noeud 2 est son supérieur hiérarchique immédiat et qu'il peut communiquer avec le noeud 2 par son port 3a. Le fait que le noeud 3 a été pris en compte, est mémorisé pendant un délai prédéterminé, en lançant un temporisateur incorporé au noeud 3.

Le pointeur d'adresse de port à tester désigne ensuite le port 2b. La station maître PC envoie un message

5

de test pour tester le port 2b. Le port 2b envoie un message d'interrogation sur la liaison qu'il possède. Le port 2b reçoit pour réponse : 4a, 4b, 4c. Cette réponse signifie qu'un noeud 4 est connecté au port 2b, et que le noeud 4 possède trois ports 4a, 4b, 4c. Cette réponse est retransmise par le noeud 2 à son supérieur hiérarchique immédiat, en vue de la faire parvenir à la station maître PC. Pour le noeud 2, le supérieur hiérarchique immédiat est la station maître PC elle-même. La réponse est mémorisée dans la mémoire de la station centrale, à trois adresses successivement pointées par le pointeur d'adresse de réponse, à la suite des autres réponses. Cette réponse est mémorisée partiellement dans le noeud 2, en inscrivant, dans la mémoire propre au port 2b, le numéro du noeud qui a répondu : 4. Le noeud 2 sait ainsi qu'il peut communiquer avec le noeud 4 par son port 2b. Le fait que le noeud 4 a reçu un message d'interrogation par le port 4a est mémorisé dans la mémoire propre à ce port 4a en y inscrivant le marqueur 0. Le noeud 4 sait ainsi qu'il peut acheminer par ce port un message qui doit remonter l'ordre hiérarchique. Le fait que le message d'interrogation provenait du noeud 2 est mémorisé dans la mémoire propre au port 4a en y inscrivant 2. Le noeud 4 sait ainsi que le noeud 2 est son supérieur hiérarchique immédiat. Le fait que le noeud 4 a été pris en compte est mémorisé en lançant un temporisateur, dans le noeud 4.

Le pointeur d'adresse de port à tester désigne le port 2c. La station centrale envoie un message de test pour tester le port 2c. Le port 2c n'a pas besoin d'envoyer un message d'interrogation pour connaître le noeud auquel il est relié. Le simple fait que le message de test arrive au noeud 2 par le port 2c permet de conclure que le port 2c ne permet pas de prolonger l'arbre car ce port est orienté vers la racine de l'arbre. Le procédé consiste à détecter par un test que c'est le port 2c qui a reçu le message de test, et déclencher l'envoi d'un message de réponse contenant un marqueur p signifiant que le port testé, 2c, ne permet pas de prolonger l'arbre, car il est orienté vers la racine de l'arbre. Cette réponse est mémorisée dans la mémoire de la station maître, en inscrivant seulement le marqueur p à l'adresse pointée par le pointeur d'adresse de réponse. Lorsque le pointeur d'adresse de port à tester désignera le marqueur p, le programme ne testera pas de port, il incrémentera le pointeur d'adresse de port à tester, pour tester un autre port.

La procédure d'interrogation du noeud 2 décrite ci-dessus est réitérée pour d'autres noeuds, en passant en revue successivement les ports qui ont été identifiés au cours de l'interrogation du noeud 2, c'est-à-dire les ports du noeud 3 puis les ports du noeud 4.

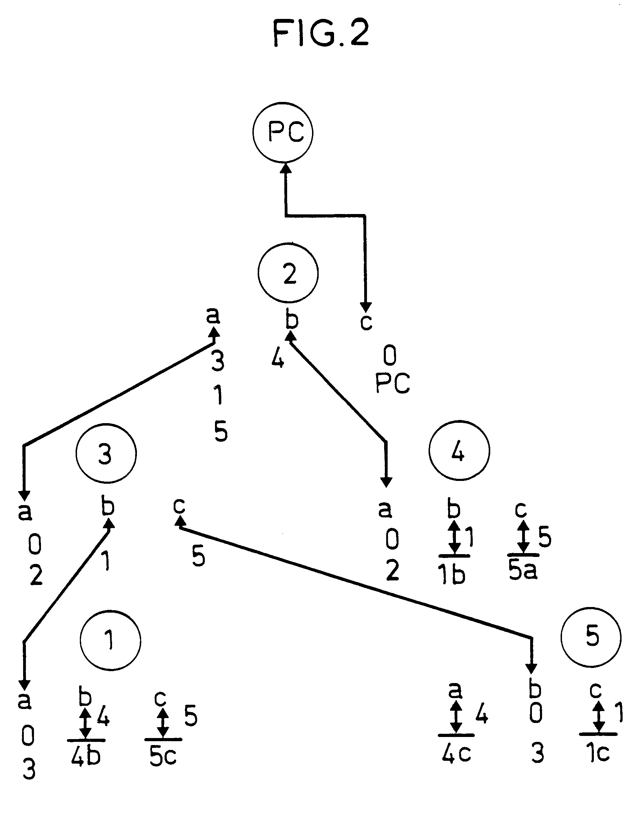

La figure 2 représente schématiquement un sous-réseau à structure d'arbre déterminé par l'exemple de mise en oeuvre du procédé selon l'invention, décrit ici. En dessous de chaque symbole a, b, c, représentant chaque port, est notée une liste de numéros. Ce sont les numéros de noeud et le marqueur 0 qui sont stockés dans la mémoire propre à ce port. Par exemple, la mémoire propre au noeud 2a contient les numéros de noeuds 3, 1, 5. Ces numéros correspondent aux liaisons : 2a-3a, 3b-1a, 3c-5b qui sont des chemins empruntables pour acheminer un message du noeud 2 respectivement vers les noeuds 3, 1, 5.

Le tableau ci-dessous représente le contenu de la mémoire de la station maître PC, à cette étape, en soulignant le contenu de l'adresse pointée par le pointeur d'adresse de port à tester, et l'emplacement mémoire pointé par le pointeur d'adresse d'écriture de réponse.

| 2a | 2b | 2c | <u>3a</u> | 3b | 3c | 4a | 4b | 4c | p | — |
|----|----|----|----|----|----|----|----|----|----|----|

Le programme lit l'emplacement mémoire pointé par le pointeur d'adresse de port à tester. Son contenu est 3a. La station maître PC, envoie un message de test au port 3a. Ce message est transmis par le noeud 2, qui sait que le noeud 3 est relié à son port 2b, grâce à la mémoire propre au port 2b, qui contient 3. Le port 3a n'a pas besoin d'envoyer un message d'interrogation pour connaître le noeud auquel il est relié. Le test mentionné précédemment à propos du port 2c détecte que le message de test arrive au noeud 3 par le port 3a. Le noeud 3 envoie alors un message de réponse contenant le marqueur p à son supérieur hiérarchique, 2, en vue de le faire parvenir à la station maître PC. Pour le noeud 2, le supérieur hiérarchique immédiat est la station maître PC, elle-même. Le noeud 2 remplace l'adresse de destinataire 2 par PC, et remplace l'adresse d'expéditeur, 3, par son identité, 2, puis réémet le message de réponse sur le port 2c, qui est désigné par le marqueur 0 comme port d'acheminement vers tout supérieur hiérarchique. La réponse est transmise par le noeud 2 jusqu'à la station maître. Elle est inscrite dans la mémoire de la station maître, à l'emplacement désigné par le pointeur d'adresse d'écriture de réponse. Cette réponse p n'est pas mémorisée dans la station 2, car elle ne permet pas à la station 2 d'augmenter sa connaissance de la configuration : la station 2 savait déjà que son port 2a est relié au noeud 3.

Le pointeur d'adresse de port à tester désigne maintenant le port 3b. Un message de test comportant cette adresse est envoyé par la station maître. Il est retransmis par le noeud 2 jusqu'au noeud 3, le noeud 2 sachant qu'il est relié au noeud 3 par son port 2a, grâce au contenu de la mémoire du port 2a. Le port 3b envoie un message d'interrogation sur sa liaison. Le noeud 1 reçoit ce message. Il lance un temporisateur incorporé au noeud 1 et provoque l'inscription de 0,3 dans la mémoire propre au port 1a. Le noeud 1 répond au noeud 3 : 1a, 1b, 1c. Cette réponse signifie que le port 3b est relié à un noeud 1, et comportant trois ports : 1a, 1b, 1c. La réponse du noeud interrogé, 1, est réémise du noeud 3, qui possède le port testé, 3b, vers son supérieur hiérarchique immédiat, 2, en vue de la faire parvenir jusqu'à la station maître PC, en suivant la voie hiérarchique.

Le supérieur hiérarchique est déterminé en cherchant le marqueur 0 dans les mémoires propres aux ports du noeud 3, puis en prenant l'identité du port qui suit immédiatement le marqueur 0 dans la même mémoire. Le message de réponse est réémis par le noeud 3 après avoir remplacé 3 par 2 dans l'adresse de destinataire et après avoir remplacé l'adresse d'expéditeur 1, par son identité : 2. Le message de réponse arrive au noeud 2, où il est reconnu comme message de réponse à un test, et devant être acheminé par la voie hiérarchique.

Le noeud 2 réémet ce message après avoir remplacé 2 par PC dans l'adresse de destinataire, puisque son supérieur hiérarchique immédiat est la station maître PC. La réponse est inscrite dans la mémoire de la station maître PC, à l'adresse désignée par le pointeur d'adresse de réponse. Cette réponse est inscrite partiellement dans la mémoire propre au port 3b dans le noeud 3, et dans la mémoire propre au port 2a dans le noeud 2, en y inscrivant : 1.

Un message de test similaire adressé au port 3c reçoit pour réponse : 5a, 5b, 5c. La mémoire propre au port 5b est inscrite pour y mettre : 0,3. Un temporisateur est lancé, dans le noeud 5. La station maître mémorise 5a, 5b, 5c.

A ce stade, le contenu de la mémoire de la station maître PC est le suivant :

| 2a | 2b | 2c | 3a | 3b | 3c | _4a_ | 4b | 4c | p | p |
|----|----|----|----|----|----|------|----|----|---|---|
| 1a | 1b | 1c | 5a | 5b | 5c | —— | | | | |

Le pointeur d'adresse de port à tester pointe une adresse qui contient 4a. Le cas est semblable à ceux des ports 2c, 3a, 1a. Le noeud 4 répond en envoyant un marqueur : p, qui signifie que le noeud 4 ne permet pas de prolonger l'arbre.

La station maître teste ensuite le port 4b. Son message de test est transmis par le noeud 2. La mémoire propre au port 2b contenant 4, la demande peut être acheminée au noeud 4 par l'intermédiaire du port 2b. Le port 4b interroge le noeud auquel il est relié. Il reçoit pour réponse : e1b. Cette réponse signifie que le port 4b est relié au port 1b du noeud 1, mais que ce dernier a déjà été pris en compte, car le temporisateur du noeud 1 a été lancé.

Le marqueur e indique aux noeuds situés sur la voie hiérarchique, et indique à la station maître, que la liaison 4b-1b ne doit pas être intégrée au sous-réseau en cours de détermination, sous peine de former une maille, donc ne plus avoir une structure en arbre. Autrement dit, il n'y aurait plus un chemin unique pour acheminer un message de la station maître PC jusqu'au noeud 1, et certains chemins n'auraient pas une longueur minimale. Il est à remarquer que dans un tel cas, il est inutile que le noeud interrogé donne l'identité de tous ses ports : 1a et 1c ne sont pas mentionnés. Par contre, il est utile que la station maître PC connaisse l'identité du port qui répond au noeud 4, car il pourrait y avoir un ou plusieurs autres ports du noeud 2 qui soit relié au noeud 4. La station maître peut, dans ce cas, distinguer les différentes liaisons et peut utiliser cette connaissance pour déterminer un nouvel arbre hiérarchique en cas de défaillance d'une liaison, sans avoir à refaire une détermination complète de la configuration.

La réponse e1b est inscrite partiellement dans la mémoire propre au port 4b dans le noeud 4, sous la forme : 1, qui signifie que le port 4b est relié au noeud 1. Un chemin allant de la station maître au noeud 1 est déjà connu et est suffisant pour le sous-réseau à déterminer. Par conséquent, la liaison 4b-1b ne sera pas une liaison privilégiée dans cette configuration, pour communiquer entre la station maître et le noeud 1. La réponse e1b est transmise par la voie hiérarchique, c'est-à-dire par le noeud 2, sans être mémorisée dans le noeud 2, puisque les messages à destination du noeud 1 ne devront pas transiter par le port 2b. La réponse e1b est inscrite complètement dans la mémoire de la station maître, à l'adresse désignée par le pointeur d'adresse de réponse.

En pratique, un noeud intermédiaire qui fait partie de la voie hiérarchique, et qui réémet un message de réponse à un test, applique une règle consistant à mémoriser les numéros de noeud contenus dans le message de réponse, sauf ceux accompagnés du marqueur e; et à ne pas mémoriser les marqueurs 0. Par exception à cette règle, le noeud testé, qui est un noeud intermédiaire particulier appartenant à la voie hiérarchique, mémorise l'identité d'un noeud contenu dans un message de réponse et accompagné du marqueur e, si ce message de réponse est émis par un noeud ayant cette identité, autrement dit si l'expéditeur est un noeud immédiatement voisin. Dans cet exemple, le noeud 4, qui est le noeud testé, agit comme noeud intermédiaire pour transmettre le message de réponse e1b émis par le noeud 1 vers la station maître PC. Donc le noeud 4, mémorise 1, dans la mémoire propre du port 4b qui reçoit ce message. Cela va permettre au noeud 4 d'acheminer un message vers le noeud 1 par un "raccourci". Quand un message à destination du noeud 1 est émis ou réémis par le noeud 4, il serait pénalisant de faire passer le message seulement par les branches de l'arbre. Il transiterait par les noeuds 2 et 3, alors que la liaison 4b-1b offre un "raccourci" sans noeud intermédiaire. Sur la figuree 2, près du port 4b, cette possibilité de liaison, exceptionnelle, est représentée par une petit segment avec, à son extrémité, l'identité complète du port 1b auquel est relié le port 4b, mais cette identité n'est représentée que pour aider la compréhension; elle n'est pas mémorisée sous cette forme complète, dans le noeud 4.

La station maître PC teste ensuite le port 4c. La réponse est : e5a. Cette réponse signifie que le port 4c est relié à un port 5a du noeud 5, mais que le noeud 5 a déjà été interrogé précédemment au cours de la même procédure de configuration, son temporisateur fournissant le marqueur e. Cette réponse est mémorisée complètement dans la mémoire de la station maître. Elle est mémorisée partiellement sous la forme : 5, dans la mémoire propre au port 4c. Elle n'est pas mémorisée dans le noeud 2.

Le contenu de la mémoire de la station maître est alors le suivant :

| 2a | 2b | 2c | 3a | 3b | 3c | 4a | 4b | 4c | p | p |
|----|----|----|----|----|----|----|-----|-----|---|---|
| 1a | 1b | 1c | 5a | 5b | 5c | p | e1b | e5a | —— | |

L'adresse pointée par le pointeur d'adresse de port à tester contient le marqueur p. L'adresse suivante contient aussi le marqueur p. La station maître lit le contenu de ces adresses mais n'en tient pas compte, et incrément encore le pointeur d'adresse de port à tester.

Ce dernier pointe ensuite une adresse qui contient 1a. La station maître teste alors le port 1a. Le message de test est transmis par le port 2a du noeud 2, puisque la mémoire propre au port 2a contient 1, qui indique que ce port permet d'acheminer un message jusqu'au noeud 1. Par le port 2a, le message de test arrive au noeud 3. Il est transmis ensuite par le port 3d, puisque la mémoire propre au port 3d contient 1 indiquant que ce port permet d'acheminer un message vers le noeud 1. Ce message arrive au noeud 1 par le port 1a. Le port 1a mémorise 0,3. Un temporisateur situé dans le noeud 1 est lancé. Le noeud 1 envoie à la station maître PC une réponse qui est constituée par le marqueur 0. Ce cas est semblable à celui des ports 2c, 3a, 4a rencontrés précédemment.

La station centrale teste ensuite le port 1b. Le message de test suit le même chemin que le précédent. La réponse retransmise par le port 1b est : e4b. Cette réponse est mémorisée complètement dans la mémoire de la station maître, et partiellement, sous la forme : 4, dans la mémoire propre au port 4b. Elle n'est pas mémorisée dans les noeuds intermédiaires 2 et 3, car ceux-ci détectent la présence du marqueur e, et détectent que le numéro contenu dans la réponse : 4, est différent de l'adresse d'expéditeur : 1 et 3 respectivement. La liaison 1b - 4b ne sera utilisée que pour acheminer un message émis ou réémis par le noeud 1 à destination du noeud 4, car dans ce cas elle constitue un "raccourci" par rapport à un chemin situé sur l'arbre.

La station maître PC teste ensuite le port 1c. Ce dernier réémet comme réponse : e5c. Cette réponse est mémorisée complètement dans la mémoire de la station maître, et partiellement, sous la forme : 5, dans la mémoire propre au port 1c. Elle n'est pas mémorisée dans les noeuds intermédiaires 2 et 3 car ceux-ci détectent la présence du marqueur e, et détectent que le numéro contenu dans la réponse : 5, est différent de l'adresse d'expéditeur, respectivement : 1 et 3. La liaison 1c - 5c ne sera utilisée que pour acheminer un message émis ou réémis par le noeud 1 à destination du noeud 5, car dans ce cas elle constitue un "raccourci" par rapport à un chemin situé sur l'arbre.

La station maître teste ensuite le port 5a. La réponse réémise par le port 5a est : e4c. Cette réponse est mémorisée complètement dans la station maître PC, et partiellement dans la mémoire propre au port 5a.

La station maître interroge ensuite le port 5b la réponse est : p. Cette réponse est mémorisée seulement dans la station maître PC. Enfin, la station maître teste le port 5c la réponse est : e1c. Cette réponse est mémorisée complètement dans la mémoire de la station maître PC, et partiellement dans la mémoire propre au port 5c, sous la forme : 1.

A ce stade, le contenu de la mémoire de la station maître est le suivant :

| 2a | 2b | 2c | 3a | 3b | 3c | 4a | 4b | 4c | p | p |
| 1a | 1b | 1c | 5a | 5b | 5c | p | e1b | e5a | p | e4b |
| e5c | e4c | p | e1c | | | | | | | |

Le pointeur d'adresse de port à tester pointe une adresse qui contient un marqueur p. La station maître incrémente ce pointeur, car ce n'est pas le numéro d'un port qui puisse être testé utilement. De même, le contenu de toutes les adresses suivantes correspond à des ports qui ne peuvent pas être testés utilement car le marqueur e indique qu'ils ont tous déjà été testés au cours de cette même procédure de configuration. Cette procédure se termine donc. La mémoire de la station maître contient alors l'identité de tous les ports de tous les noeuds du réseau. La mémoire propre à chaque port, dans les noeuds, contient l'identité de tous les autres noeuds qui peuvent être atteints par l'intermédiaire de ce noeud et des liaisons priviligiées; et contient en outre l'identité de noeuds immédiatement voisins qui peuvent être atteints par des liaisons non privilégiées, mais qui constituent des raccourcis intéressants pour améliorer les performances du réseau.

Il est à remarquer que la mise en oeuvre du procédé selon l'invention ne requiert que des dispositifs classiques, dans les noeuds et la station maître : un processeur, une mémoire de programme, et une mémoire de données.

Les résultats de la détermination de la configuration d'un réseau permettent d'acheminer un message de la manière suivante. Pour acheminer un message depuis un noeud créateur de ce message, ou simplement retransmetteur, le processeur du noeud commence par rechercher, dans les mémoires propres aux ports de ce noeud, la présence de l'identité du noeud destinataire. S'il trouve cette identité, il en déduit que le port à utiliser, pour émettre ou réémettre le message, est celui correspondant à la mémoire dans laquelle cette identité a été trouvée. S'il ne trouve cette identité dans aucune des mémoires propres à ses ports, il en déduit que le message ne peut pas être acheminé dans un sous-arbre dont il est la racine, ou par un raccourci, mais qu'il doit être acheminé en faisant remonter ce message en direction de la racine de l'arbre, jusqu'à ce qu'il rencontre un noeud dans lequel l'une des mémoires propres aux ports contient l'identité du noeud destinataire. Pour faire remonter le message, le noeud recherche dans les mémoires propres à ses ports, le marqueur 0 qui désigne le port permettant de remonter la voie hiérarchique.

Par exemple, le noeud 3 souhaite envoyer un message au noeud 4. Ce message a pour adresse de destinataire 4. Le noeud 3 cherche 4 dans les mémoires propres aux ports 3a, 3b, 3c. Il ne le trouve pas. Il cherche alors le marqueur 0 dans ces mémoires. Le marqueur 0 est trouvé dans la mémoire du port 3a. Le noeud 3 envoie son message par le port 3a. Le message remonte la hiérarchie des noeuds. Ce message arrive au noeud 2. Le noeud 2 cherche 4 dans les mémoires propres aux ports 2a, 2b, 2c. Il le trouve dans la mémoire propre au port 2b. Il retransmettra le message par le port 2b. Le message arrive au noeud 4 par le port 4a.

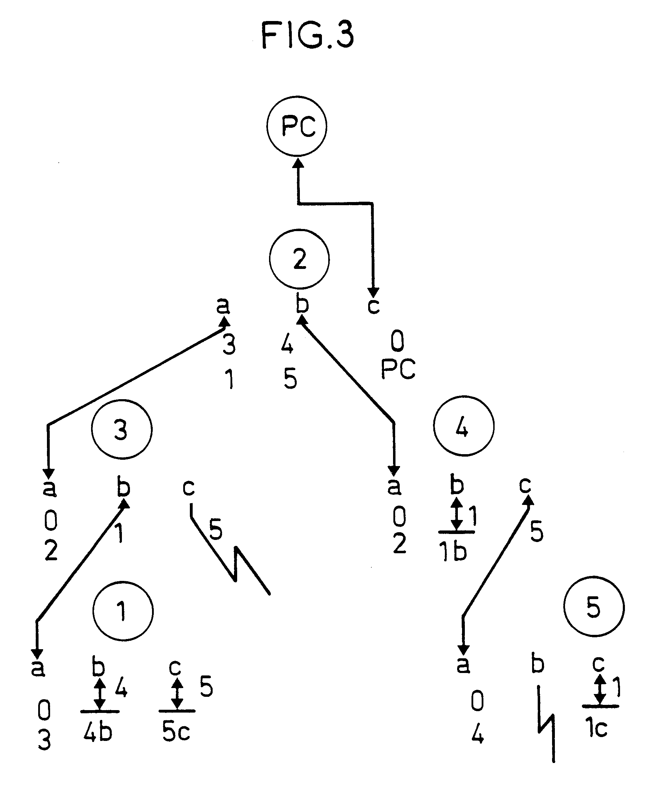

La figure 3 illustre un exemple de mise en oeuvre du procédé selon l'invention pour l'exemple de réseau représenté sur la figure 1, lorsqu'une rupture de la liaison 3c-5b est détectée par les noeuds 3 et 5, et conduit la station maître PC à refaire une détermination de la configuration du réseau. Cette nouvelle détermination a pour résultat un nouvel arbre ayant une nouvelle branche 4c-5a reliant le noeud 5 à l'arbre. Autrement dit, il existe un nouveau chemin de longueur minimale reliant la station maître au noeud 5. La mise en oeuvre du procédé selon l'invention est identique à celle décrite précédemment, jusqu'au moment où la station maître PC teste le port 3c.

Dans le cas où la liaison 3c-5b est interrompue, la station maître teste 3c sans que celui-ci puisse retransmettre une réponse, par conséquent l'existence du noeud 5 n'est plus constatée à ce stade de la procédure, mais à un stade ultérieur, lorsque la station maître teste le port 4c. La procédure d'interrogation exécutée par le port 4c sur sa liaison lui permet de constater qu'il est relié à un noeud 5 comportant des ports 5a, 5b, et 5c. Le port 5a est celui qui reçoit le message de test, par conséquent un marqueur 0 est inscrit dans la mémoire propre au port 5a. Le port 5a constate aussi que l'identité du noeud auquel il est relié est 4. Ce numéro 4 est donc inscrit aussi dans la mémoire propre du port 5a. Quand la station maître PC teste le port 5b, elle n'obtient aucune réponse. Au bout d'un délai prédéterminé, elle conclue que le port 5b est reliée à une liaison défectueuse ou inexistante. Ensuite, lorsque la station maître teste le port 5c, ce dernier exécute une procédure d'interrogation sur sa liaison, avec le même résultat que dans le cas correspondant à la figure 1.

Le procédé selon l'invention est compatible avec un procédé de surveillance du réseau consistant à tester périodiquement chaque port, pour surveiller l'état de chaque liaison, et consistant, si une liaison est interrompue, à signaler ce fait à la station maître PC, pour qu'elle recommence une procédure de détermination de configuration du réseau.

Le procédé selon l'invention est applicable à des formes de réseau plus complexes que celles des réseaux multi-points à point. Il y a notamment des réseaux où un port n'est relié directement à un noeud voisin que par une liaison unidirectionnelle, la transmission en sens inverse devant passer par des noeuds intermédiaires et une autre liaison unidirectionnelle. Dans un tel cas, le noeud interrogé ne peut pas répondre sur la même liaison unidirectionnelle. La réponse doit être acheminée par une autre liaison unidirectionnelle, via d'autres noeuds éventuellement.

L'acheminement est problématique si ces autres noeuds n'ont encore aucune information dans leurs mémoires de port parce qu'ils n'ont pas encore été pris en compte dans la configuration. Pour remédier à ce problème, chaque noeud qui n'a pas encore été pris en compte applique la règle suivante : il réémet le message par le même port que celui qui a reçu le message, chaque port étant, par hypothèse, une entrée-sortie reliée à deux liaisons unidirectionnelles ou à une seule liaison bidirectionnelle. Si le noeud intermédiaire a déjà été pris en compte dans la configuration, il recherche dans les mémoires propres à ses ports, si l'une d'elles contient l'identité du noeud auquel est adressé le message; et sinon, il recherche la mémoire contenant le marqueur 0 repérant la voie hiérarchique; puis il réémet le message par le port correspondant à la mémoire ainsi déterminée. Le message finit toujours par trouver un noeud qui connaît la direction du noeud destinataire, ou au moins la direction remontant la hiérarchie des noeuds, vers la racine de l'arbre, d'où il peut redescendre vers le noeud destinataire.

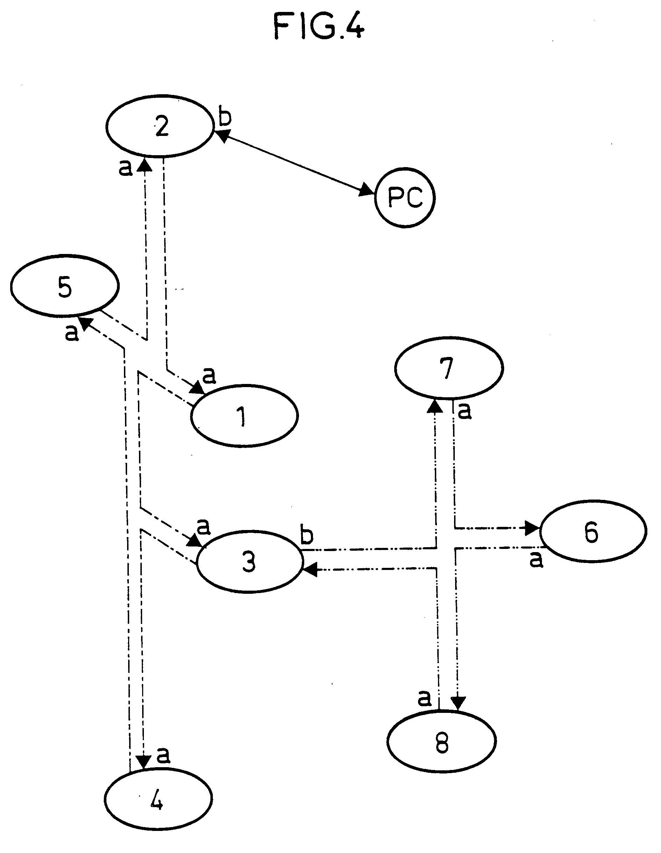

La figure 4 représente un exemple de réseau en anneaux, comportant 8 noeuds numérotés de 1 à 8, et une station maître référencée PC. Des stations 1 à 5 forment un premier anneau et les stations 3, 6, 7, 8 forment un second anneau, les deux anneaux ayant en commun la station 3. La station 2 possède deux ports, a et b. Le port a est constitué d'une entrée et d'une sortie reliées respectivement à deux liaisons unidirectionnelles distinctes, alors que le port b est constitué d'une entrée-sortie reliée à la station maître PC par une liaison bidirectionnelle. Les noeuds 1, 4, 5, 6, 7, 8 possèdent chacun un seul port, référencé a, comportant une entrée et une sortie reliées respectivement à deux liaisons unidirectionnelles distinctes. Le noeud 3 comporte deux ports a, et b, comportant chacun une entrée et une sortie distinctes reliées respectivement à deux liaisons unidirectionnelles distinctes.

La mise en oeuvre du procédé selon l'invention est quasi-identique à celle décrite précédemment pour un réseau multipoints à points, la seule différence apparaît lorsqu'un port est testé pour connaître l'identité des noeuds auxquels il est relié, et qu'il exécute une procédure d'interrogation, sur la liaison unidirectionnelle connectée à la sortie du port considéré. Il envoie au noeud immédiatement voisin un message d'interrogation lui demandant son identité. Le noeud voisin émet un message de réponse qui doit revenir au port testé et celui-ci doit le réemettre à destination de la station maître PC. L'acheminement de ce message doit respecter deux contraintes : les liaisons sont uni-directionnelles; et les noeuds intermédiaires, s'ils sont déjà pris en compte dans l'arbre hiérarchique, doivent être parcourus dans l'ordre hiérarchique défini par cet arbre en cours de détermination. A cause de ces deux contraintes, le message de réponse peut devoir faire plusieurs tours d'anneau, comme il apparaîtra plus loin.

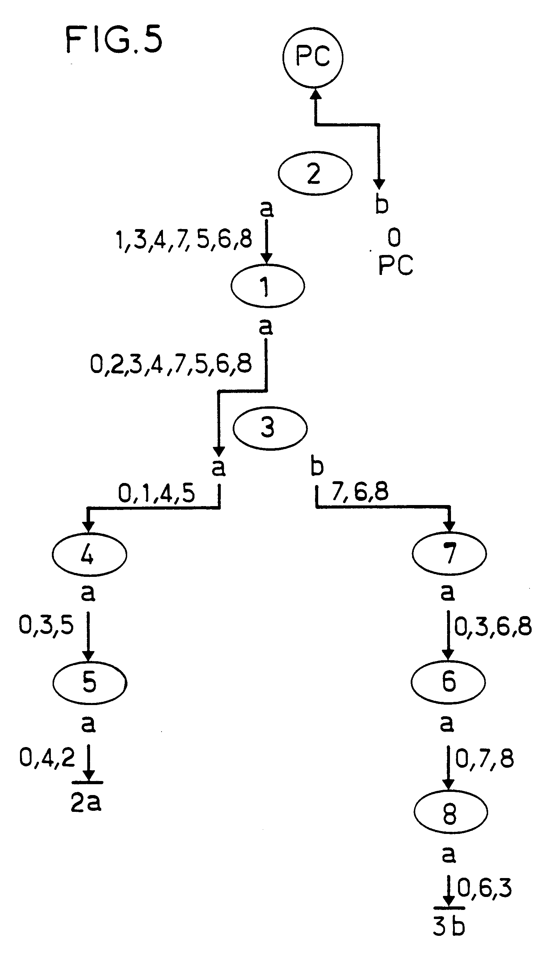

La figure 5 illustre la mise en oeuvre du procédé selon l'invention pour l'exemple de réseau représenté sur la figure 4. La liste des numéros inscrits dans la mémoire propre à un port est représentée à côté du symbole correspondant à ce port.

Le programme mis en oeuvre par le processeur de la station maître consiste tout d'abord à interroger le noeud qui est relié à la station maître PC, pour déterminer l'identité de ce noeud et l'identité des ports que possède ce noeud. La réponse est : 2a, 2b. Cette réponse est inscrite dans une mémoire de la station maître, à des adresses fournies par un pointeur d'adresses d'écriture de réponse. Un pointeur d'adresses de port à tester est incrémenté, d'une manière identique à celle décrite précédemment. Le marqueur 0 et l'identité, PC, du noeud à l'origine du message de test, sont inscrits dans la mémoire propre au port 2b. Un temporisateur incorporé au noeud 2 est lancé, pour mémoriser que le noeud 2 a été pris en compte dans la configuration.

Un message de test est envoyé au port 2a. Le port 2a exécute une procédure d'interrogation sur la liaison à laquelle il est relié. Le noeud 1 reçoit le message de test et émet un message de réponse par le port 1a. La réponse est constituée par son numéro de port : 1a. En outre, il inscrit dans la mémoire propre au port 1a : un marqueur 0, parce que le message a été reçu par ce port; et il inscrit l'identité, 2, du noeud qui a envoyé le message de test. Ce numéro est extrait de la partie du message d'interrogation contenant l'adresse, 2a, de l'expéditeur du message. Le message de réponse contient 2 comme adresse de destinataire car il doit revenir au noeud 2 pour lui délivrer la réponse. Un temporisateur, incorporé au noeud 1 est lancé, pour mémoriser que le noeud 1 a été pris en compte dans la configuration.

Le message de réponse arrive au noeud 3. Le noeud 3 n'a pas encore été pris en compte dans la configuration, car il n'a jamais été interrogé. Le processeur du noeud 3 applique la règle selon laquelle, lorsque le noeud n'a pas été pris en compte dans la configuration, c'est-à-dire lorsque son temporisateur n'est pas lancé, le message est réémis par le même port. Dans cet exemple, le port 3a réémet le message de réponse, sur sa liaison en direction du noeud 4. Il ne mémorise rien parce qu'il n'est pas le destinataire. Les noeuds 3, 4, 5 réémettent successivement le message de réponse en ne modifiant ni l'adresse destinataire, ni l'adresse d'expéditeur, et sans mémoriser le contenu du message car ils ne sont pas destinataires. Le message arrive au noeud 2 après avoir fait un tour d'anneau.

Le noeud 2 attend cette réponse car il est le noeud actuellement testé. Il mémorise 1 dans la mémoire de son port 2a puis réémet la réponse par la voie hiérarchique, en vue de la faire parvenir à la station maître PC. Il cherche le marqueur 0 dans ses mémoires de port. Il trouve 0,PC dans la mémoire du port 2b. Il met PC comme adresse de destinataire et réémet le message par le port 2b. Le message arrive directement à la station maître, car elle est le supérieur hiérarchique immédiat du noeud 2. Celle-ci mémorise le contenu du message de réponse : 1a.

Le pointeur d'adresse de port à tester est incrémenté. Il désigne 0, puis il désigne la. La station maître PC envoie un message de test au port 1a. Le noeud 2 sait router ce message, car la mémoire du port la contient 1. Le port 1a émet un message d'interrogation sur sa liaison. Ce message a pour adresse d'expéditeur : 1. Il arrive au noeud 3. Ce dernier lance un temporisateur, et mémorise 0,1 dans la mémoire du port 1a. Puis il envoie un message de réponse ayant pour adresse de destinataire 1; ayant pour contenu : 3a, 3b; et ayant pour adresse d'expéditeur : 3. Ce message est émis par le port 3a qui a reçu le message d'interrogation. Il est reçu et réémis par le noeud 4 par son port 4a, car il n'a pas encore été pris en compte dans la configuration, et sans rien mémoriser car il n'est pas destinataire. Le noeud 4 met son identité, 4, comme nouvelle adresse d'expéditeur.

Le message arrive au noeud 5. Ce dernier se comporte comme le noeud 4, car il n'a pas encore été pris en compte dans la configuration. Le message arrive au noeud 2. Ce dernier sait router le message vers le destinataire 1 car il a été pris en compte dans la configuration et la mémoire du port 2a contient 1. Le message de réponse a fait un tour d'anneau.

Il arrive au noeud 1 qui attend la réponse à son message d'interrogation. Le noeud 1 inscrit dans la mémoire du port 1a l'identité 3 contenue dans le message de réponse, puis il réémet le message de réponse par la voie hiérarchique, en vue de le faire parvenir à la station maître PC. Il recherche le marqueur 0 dans ses mémoires de port. Il trouve 0,2 dans la mémoire du port 1a. Il met l'adresse de son supérieur hiérarchique, 2, comme adresse de destinataire. Le noeud 1 émet ce message sur son port 1a, puisque la mémoire de ce port contient 2. Ce message arrive au noeud 3 par le port 3a. Le noeud 3 le réémet par son port 3a puisque ce noeud n'a pas encore été pris en compte. De même, ce message est réémis par les noeuds 4 et 5 en appliquant la règle de réémission par le port de réception, car ces noeuds n'ont pas encore été pris en compte dans la configuration. Le message arrive au noeud 2. Ce dernier constate que c'est un message de réponse d'une procédure de configuration et que l'adresse de destinataire est 2. Il mémorise partiellement la réponse, en inscrivant 3 dans la mémoire du port 2; puisqu'il est destinataire. Puis il réémet le message en l'adressant à son supérieur hiérarchique immédiat : la station maître PC.

A ce stade, le contenu de la mémoire du port 2a est : 1,3. Le noeud 2 sait ainsi qu'il peut acheminer des messages vers les noeuds 1,3. La station maître PC mémorise le contenu 3a, 3b, du message de réponse.

Il est à remarquer que la boucle 1, 3, 4, 5, 2 a été parcourue deux fois pour prendre en compte le noeud 3, à cause de la mono-directionnalité des liaisons.

Le pointeur d'adresse de port à tester désigne ensuite 3a. La station maître envoie un message de test au port 3a. Le port 3a envoie un message d'interrogation sur sa liaison. Le noeud 4 envoie une réponse, 4a, qui est retransmise, sans être mémorisée, par les noeuds 5, 2, 1 jusqu'au noeud 3 où le port 3a attend une réponse. Le noeud 3 mémorise 4 dans la mémoire du port 3a. Cette mémoire contient désormais 0, 1, 4. Le noeud 3 réémet la réponse par la voie hiérarchique, en vue de la faire parvenir à la station maître PC. Il met donc 1 comme adresse de destinataire et il émet sur le port 3a, correspondant à cette destination. Le message de réponse est retransmis par les noeuds 4 et 5, sans qu'ils ne mémorisent son contenu. Puis elle est reçue par le noeud 2 qui ne mémorise rien car il n'est pas destinataire. Puisque le noeud 2 la retransmet au noeud 1, qui mémorise 4. Le noeud 1 la retransmet à son supérieur hiérarchique, en mettant 2 dans l'adresse de destinataire.

Le message de réponse fait encore un tour de l'anneau 3, 4, 5 pour remonter d'un échelon hiérarchique, au noeud 2. Les noeuds 3, 4, 5 retransmettent le message sans rien mémoriser car ils ne sont pas destinataire. Le message arrive au noeud 2. Ce dernier constate que c'est un message de réponse à la procédure de configuration et que l'adresse de destinataire est 2. Il mémorise donc partiellement le contenu de la réponse en inscrivant 4 dans la mémoire du port 2a qui a reçu le message; et il réémet le message en l'adressant à son supérieur hiérarchique immédiat qui est la station maître PC. Cette dernière mémorise 4a.

Il est à remarquer que l'anneau 4, 5, 2, 1, 3 a été parcouru deux fois pour prendre en compte le noeud 4 dans la configuration, mais ce fait a permis d'enrichir la connaissance des noeuds 2 et 1 situés sur la voie hiérarchique entre le noeud testé 3 et la station maître PC.

Le pointeur d'adresse de port à tester désigne alors le port 3b. La station maître envoie un message de test au port 3b. Le port 3b envoie un message d'interrogation sur sa liaison. Le noeud 7 le reçoit sur son port 7a. Le noeud 7 mémorise 0,3 dans la mémoire de son port 7a et lance un temporisateur incorporé au noeud 7. Il envoie un message de réponse, 7a, sur la sortie de son port 7a, qui est reliée au noeud 6. Les noeuds 6 et 8, qui n'ont pas encore été pris en compte, et qui ne sont pas destinataires, retransmettent le message de réponse sans mémoriser son contenu. Ils modifient seulement l'adresse d'expéditeur.

La réponse arrive au noeud 3 par le port 3b après avoir fait un tour de la boucle 7, 6, 8. Le noeud 3 étant destinataire, il mémorise 7 dans la mémoire du port 3b puis il réémet la réponse à destination de son supérieur hiérarchique, en vue de la faire parvenir à la station maître PC. Il cherche le marqueur 0 dans ses mémoires de port. Il trouve 0,1 dans la mémopire du port 3A. Il met 1 comme adresse de destinataire et réémet la réponse par le port 3a. Les noeuds 4, 5, 2 retransmettent le message sans rien mémoriser car ils ne sont pas destinataires. Le message arrive au noeud destinataire 1 qui mémorise 7 puis réémet le message en l'adressant à son supérieur hiérarchique, en vue de le faire parvenir à la station maître PC.

Le noeud 1 trouve 0,2 dans la mémoire du port 1a. Il réémet le message par le port 1a en mettant comme adresse de destinataire : 2. Le message est retransmis par les noeuds 3, 4, 5 qui ne mémorisent rien car ils ne sont pas destinataire. Le message arrive au noeud 2. Ce dernier constate que c'est un message de réponse à la procédure de configuration et que l'adresse de destinataire est 2. Il mémorise donc 7 dans la mémoire du port 2a qui a reçu le message. Puis il réémet le message de réponse à destination de son supérieur hiérarchique immédiat qui est la station maître PC. Cette dernière mémorise 7a.

Comme pour l'exemple représenté sur la figure 1, l'arbre de la configuration est muni de "raccourcis" aux extrémités de ses branches. Mais, le message de réponse peut atteindre la station maître PC en, utilisant d'autres "raccourcis" dans certains cas. Cette possibilité ne se présente que dans le cas où le noeud interrogé a déjà été pris en compte dans la configuration. Il répond alors en donnant l'identité de ses ports avec le marqueur e. Dans ce cas, une règle, optionnelle, consiste à retransmettre le message de réponse du noeud testé à la station maître en l'adressant à tout supérieur hiérarchique, au moyen du marqueur 0, et non au supérieur hiérarchique immédiat du noeud testé. Le noeud interrogé ayant déjà été pris en compte dans la configuration, il n'y a pas besoin de mémoriser son identité tout le long de la voie hiérarchique donc il est possible de faire remonter le message par un chemin plus court que la voie hiérarchique, et qui est constitué par une suite de ports dont les mémoires contiennent le marqueur 0.

Dans l'exemple de la figure 1, cette règle optionnelle n'apporte aucun gain de temps parce que les liaisons bidirectionnelles ne nécessitent pas de nombreux tours d'anneaux pour suivre la voie hiérarchique. Par contre, cette règle optionnelle est avantageuse dans l'exemple de la figure 4, car les liaisons monodirectionnelles et les structures en anneaux nécessitent de nombreux tours d'anneaux pour suivre la voie hiérarchique.

Considérons, par exemple, le test du noeud 5 dans l'exemple de réseau représenté sur la figure 4. Il envoie un message d'interrogation au noeud 2. Ce dernier envoie un message de réponse contenant e2a. Ce message est retransmis par les noeuds 1, 3, 4 jusqu'au noeud 5 qui l'attend. Celui-ci mémorise 2 dans la mémoire de son port 2a, puis il réémet le message en mettant le marqueur 0 comme adresse de destinataire au lieu de l'adresser à son supérieur hiérarchique 4. Le noeud 2 réémet le message par le port 2b parce que sa mémoire contient 0. Le message arrive directement à la station maître PC. Si le message avait suivi la voie hiérarchique, il serait allé au noeud 4, via les noeuds 2, 1, 3. Puis il serait allé au noeud 3, via les noeuds 5, 2, 1. Puis il serait allé au noeud 2, via les noeuds 4, 5. Enfin, il serait allé à la station maître. Il aurait donc fait deux tours d'anneau en plus.

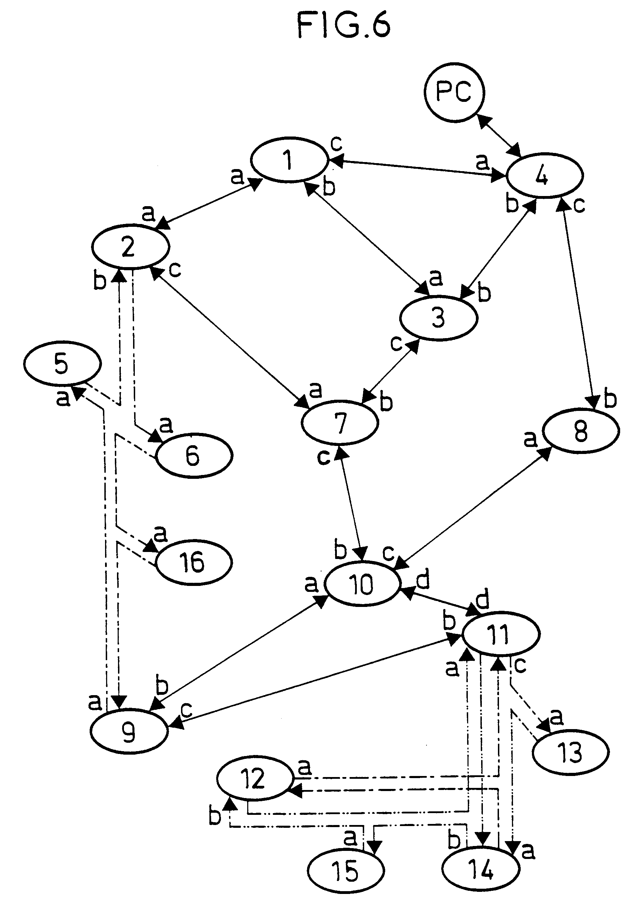

La figure 6 représente schématiquement un exemple de réseau mixte, qui est un mélange de réseaux multipoints à point et d'anneaux.

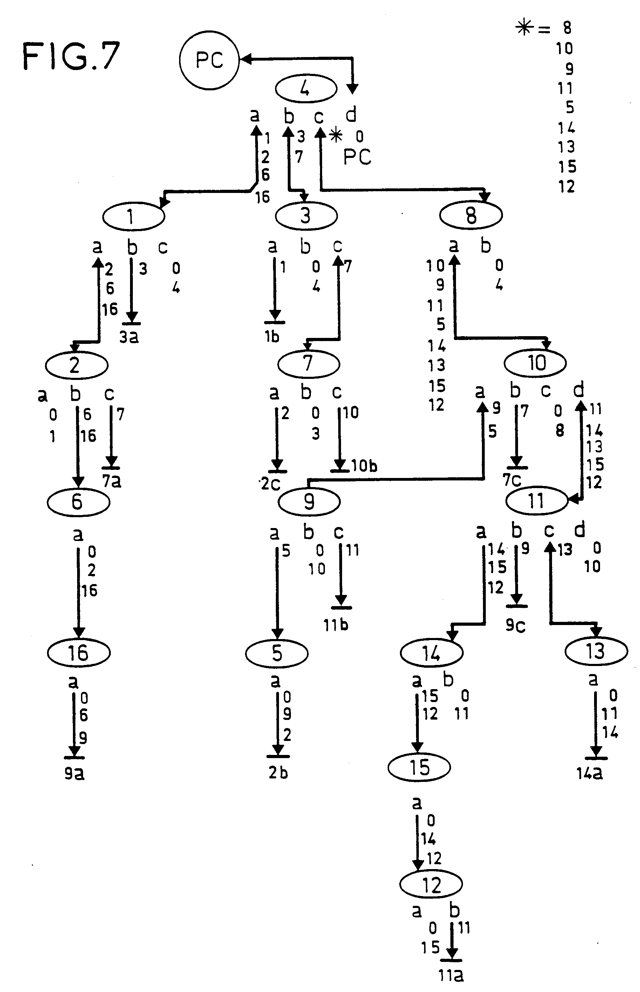

La figure 7 illustre un exemple de mise en oeuvre du procédé selon l'invention, pour l'exemple de réseau mixte représenté sur la figure 6. Les conventions de représentation sur la figure 7 sont analogues à celles des figures 2, 3 et 5. La procédure est analogue aux procédures décrites pour les deux types de réseaux pris séparément; elle applique l'ensemble des règles mentionnées précédemment. La règle optionnelle est appliquée pour transmettre les messages de réponse émis par les noeuds 16, 5, 12, 13 lorsque des ports 16a, 5a, 12b, 13a sont testés. Elle permet de trouver un chemin plus court que la voie hiérarchique dans le cas des ports 5a et 12b. Le chemin est aussi long que celui de la voie hiérarchique dans le cas des ports 16a et 13a.

**Revendications**

1.  Procédé pour déterminer automatiquement la configuration d'un réseau comportant une station maître (PC) et une pluralité de noeuds (1 à 5), chaque noeud comportant au moins un port (a, b, c) relié à au moins un port d'un autre noeud, un port de la station maître étant relié à un port (2c) de l'un des noeuds, ou bien la station maître étant intégrée à l'un des noeuds; consistant à :
    - tester successivement chaque port de tous les noeuds, chaque port n'étant testé qu'une seule fois;
    - déterminer un ordre hiérarchique des noeuds, permettant d'acheminer des messages de noeud en noeud selon un chemin déterminé;
            caractérisé en ce que pour tester successivement chaque port, il consiste à :
    - envoyer un message de test de la station maître (PC) à ce port;
    - déterminer les identités des noeuds (3) qui sont reliés directement au port testé (2a);
    - déterminer l'identité (3a, 3b, 3c) des ports que possède ces noeuds;
            et en ce que pour déterminer un ordre hiérarchique des noeuds, il consiste en outre à :
    - envoyer du noeud possèdant le port testé vers la station maître (PC), en suivant l'ordre hiérarchique des noeuds déjà déterminés, un message contenant les identités des noeuds et des ports qui ont été déterminés en testant ce port;
    - mémoriser ces identités, d'une part dans la station maître (PC), et, d'autre part, dans les stations qui sont traversées par ce message pendant son acheminement vers la station maître;
    - et en déduire, dans chaque noeud (2 à 5), un sous-réseau en forme d'arbre ayant pour racine le noeud (2) qui possède le port testé (2a).

2.  Procédé selon la revendication 1, caractérisé en ce que :
    - si le port testé est le port recevant le message de test, il consiste en outre à envoyer du noeud possédant le port testé vers la station maître (PC) un message de réponse contenant un premier marqueur (p);
    - si le port testé n'est pas le port recevant le message de test, il consiste en outre à :
        -- envoyer un message d'interrogation du port testé (2a) vers un noeud (3) appellé noeud interrogé, qui est un noeud relié au moins par une liaison allant directement du port testé au noeud interrogé; le noeud (2) possèdant le port testé (2a) étant considéré comme le supérieur hiérarchique immédiat du noeud interrogé (2) si ce dernier n'a pas déjà été pris en compte dans la configuration;
        -- si le noeud interrogé (3) a déjà été pris en compte dans la configuration, émettre un message de réponse adressé au noeud (2) possédant le port testé (2a), ce message contenant un deuxième marqueur (e) et l'identité du port (3a) ayant reçu le message d'interrogation;
        -- si le noeud interrogé n'a pas déjà été pris en compte dans la configuration :
            --- lancer, dans le noeud interrogé, un temporisateur pour indiquer que ce noeud (3) a été pris en compte dans la configuration;
            --- mémoriser un troisième marqueur (O) et l'identité (2) du noeud possédant le port testé (2a), dans le noeud interrogé (3), dans une mémoire propre au port (3a) ayant reçu le message d'interrogation, pour repérer le port qui conduit à tous les supérieurs hiérarchiques, et pour mémoriser l'identité du supérieur hiérarchique immédiat du noeud interrogé (3);
            --- émettre un message de réponse, à partir du noeud interrogé, adressé au noeud testé et contenant l'identité de chaque port du noeud interrogé
                et en ce que dans tous les cas, il consiste en outre à :
        - acheminer le message de réponse du noeud interrogé (3) au noeud (2) possèdant le port testé (2a), via des noeuds intermédiaires éventuellement, chaque noeud intermédiaire réémettant le message de réponse par le port où il l'a reçu;
        - mémoriser au moins en partie, dans une mémoire propre au port testé (2a), le contenu (3a, 3b, 3c) du message de réponse du noeud interrogé, pour repérer le port (2a) qui conduit au noeud testé (3);
        - émettre un message de réponse, à partir du noeud testé (3), adressé en général au supérieur hiérarchique immédiat (2) du noeud testé, en vue de le faire parvenir à la station maître (PC), le contenu de ce message de réponse étant fonction du contenu du message de réponse envoyé par le noeud interrogé;
        - acheminer ce message de réponse jusqu'à la station maître (PC), via des noeuds déjà pris en compte dans la configuration, chacun de ces noeuds réémettant le message en l'adressant en général à son supérieur hiérarchique immédiat et en mémorisant au passage l'identité du noeud interrogé, déduite de l'identité des ports contenue dans ce message de réponse, sauf lorsque cette identité est remplacée par le premier marqueur (p) ou est accompagnée du deuxième marqueur (e).

3.  Procédé selon la revendication 2, caractérisé en ce que pour réémettre un message de réponse à partir d'un noeud testé ou à partir d'un noeud intermédiaire déjà pris en compte dans la configuration, selon l'ordre hiérarchique déterminé, il consiste à :
    - rechercher dans les mémoires propres aux ports du noeud testé, respectivement du noeud intermédiaire, la mémoire qui contient le troisième marqueur (0), et en déduire l'identité du noeud qui est le supérieur hiérarchique immédiat;
    - réémettre le message par le port correspondant à la mémoire ainsi déterminée, en l'adressant au noeud supérieur hiérarchique immédiat.

4.  Procédé selon la revendication 2, caractérisé en ce que pour émettre un message de réponse à partir du noeud testé, en vue de le faire parvenir à la station maître (PC), il consiste exceptionnellement à l'adresser à tout supérieur hiérarchique, au moyen du troisième marqueur (0), au lieu de l'adresser au supérieur hiérarchique immédiat du noeud testé, dans le cas où le message de réponse contient le deuxième marqueur (e) indiquant que le noeud interrogé est un noeud ayant déjà été pris en compte dans la configuration.

5.  Procédé selon la revendication 2, caractérisé en ce que chaque port (a, b, c) de chaque noeud (3) est identifié par une identité (3a, 3b, 3c) contenant l'identité (3) du noeud qui possède ce port;
    et en ce que pour tester successivement chaque port de chaque noeud du réseau, il consiste tout d'abord à déterminer l'identité de chaque port (2a, 2b, 2c) du noeud (2) qui est relié à la station martre (PC) ou qui intègre celle-ci; et il consiste ensuite, pour tester successivement chaque port de chaque noeud (3), à :
    - lire, dans une mémoire de la station maître (PC), l'identité (3a) d'un port à tester, dans l'ordre (3a, 3b, 3c) où des identités de port y ont été écrites, les identités de port qui sont remplacées par le premier marqueur (p) ou qui sont accompagnées du second marqueur (e) n'étant pas prises en compte pour tester un port;
    - tester ce port (3a) en lui envoyant un message de test lui commandant d'envoyer un message d'interrogation au noeud auquel il est relié au moins par une liaison directe;
    - mémoriser, dans cette mémoire de la station maître (PC), chaque identité de port contenue dans le message de réponse envoyé par le noeud testé, avec les marqueurs (p, e) éventuels.

6.  Procédé selon la revendication 1, caractérisé en ce qu'il consiste en outre à surveiller l'état de chaque liaison;
    et en ce que, si une liaison est interrompue, il consiste à signaler ce fait à la station maître (PC) et à redéterminer la configuration du réseau.

## Patentansprüche

1.  Verfahren zur automatischen Bestimmung der Konfiguration eines Netzes, das eine Meisterstation (PC) und eine Vielzahl von Knoten (1 bis 5) enthält, wobei jeder Knoten mindestens einen Port (a, b, c) enthält, der mit mindestens einem Port eines anderen Knotens verbunden ist, und wobei ein Port der Meisterstation mit einem Port (2c) eines der Knoten verbunden ist oder die Meisterstation in einen der Knoten integriert ist, wobei das Verfahren darin besteht:
    - nacheinander jeden Port aller Knoten zu testen, wobei jeder Port nur ein einziges Mal getestet wird,
    - eine hierarchische Ordnung der Knoten zu bestimmen, um den Weg der Nachrichten von Knoten zu Knoten gemäß einem bestimmten Leitweg zu definieren, dadurch gekennzeichnet, daß das Verfahren zum Test der Ports nacheinander darin besteht:
    - eine Testnachricht von der Meisterstation (PC) an diesen Port zu senden,
    - die Identitäten der Knoten (3) zu bestimmten, die unmittelbar mit dem getesteten Port (2a) in Verbindung stehen,
    - die Identität (3a, 3b, 3c) der Ports dieser Knoten zu bestimmen,
    und daß zur Bestimmung einer hierarchischen Ordnung der Knoten das Verfahren weiter darin besteht,
    - vom Knoten, der den getesteten Port enthält, an die Meisterstation (PC) über die hierarchische Ordnung der bereits bestimmten Knoten eine Nachricht zu senden, die die Identitäten der Knoten und der Ports enthält, die beim Test dieses Ports bestimmt worden sind,

- diese Identitäten einerseits in der Meisterstation (PC) und andererseits in den Stationen zu speichern, über die diese Nachricht auf ihrem Weg zur Meisterstation verlaufen ist,

- und in jedem Knoten (2 bis 5) ein Unternetz in Form eines Baums abzuleiten, dessen Wurzel von dem Knoten (2) gebildet wird, der den getesteten Port (2a) enthält.

2.  Verfahren nach Anspruch 1, dadurch gekennzeichnet, daß es weiter darin besteht,

- wenn der getestete Port der die Testnachricht empfangende Port ist, eine Antwortnachricht mit einer ersten Marke (p) von dem diesen Port enthaltenden Knoten zur Meisterstation (PC) zu übertragen,

- wenn der getestete Port nicht der die Testnachricht empfangende Port ist,

-- eine Fragenachricht vom getesteten Port (2a) zu einem befragten Knoten (3) zu senden, der ein Knoten ist, welcher mindestens über eine unmittelbar vom getesteten Port zum befragten Knoten führende Verbindung angeschlossen ist, wobei der Knoten (2), der den getesteten Port (2a) enthält, als dem befragten Knoten (2) unmittelbar übergeordnet bezeichnet wird, wenn letzterer nicht bereits von der Konfiguration berücksichtigt wurde,

-- wenn der befragte Knoten (3) bereits in der Konfiguration berücksichtigt wurde, eine Antwortnachricht an den Knoten (2), der den getesteten Port (2a) enthält, auszusenden, die eine zweite Marke (e) sowie die Identität des Ports (3a) enthält, der die Fragenachricht empfangen hat,

-- wenn der befragte Knoten noch nicht in der Konfiguration berücksichtigt wurde:

--- in dem befragten Knoten eine Zeitverzögerung zu starten, die angibt, daß dieser Knoten (3) in der Konfiguration berücksichtigt wurde,

--- eine dritte Marke (0) und die Identität (2) des den getesteten Port (2a) besitzenden Knotens in dem befragten Knoten (3), und zwar in einem Speicher des Ports (3a) zu speichern, der die Fragenachricht empfangen hat, um den Port zu ermitteln, der an alle hierarchisch übergeordneten Knoten führt, und um die Identität des dem befragten Knoten (3) unmittelbar hierarchisch übergeordneten Knotens zu speichern,

--- eine Antwortnachricht vom befragten Knoten an den getesteten Knoten auszusenden, die die Identität jedes Ports des befragten Knotens enthält,

und daß in allen Fällen das Verfahren weiter drin besteht:

- die Antwortnachricht des befragten Knotens (3) zum den getesteten Port (2a) enthaltenden Knoten (2) ggf. über Zwischenknoten zu leiten, wobei jeder Zwischenknoten die Antwortnachricht über den Port wieder aussendet, über den er sie empfangen hat,

- mindestens einen Teil des Inhalts (3a, 3b, 3c) der Antwortnachricht des befragten Knotens in einen speicher des getesteten Ports (2a) zu speichern, um den Port (2a) zu bezeichnen, der zum getesteten Knoten (3) führt,

- eine Antwortnachricht ausgehend vom getesteten Knoten (3) im allgemeinen zum dem getesteten Knoten hierarchisch unmittelbar übergeordneten Knoten (2) auszusenden, um diese Nachricht der Meisterstation (PC) zukommen zu lassen, wobei der Inhalt dieser Antwortnachricht vom Inhalt der Antwortnachricht abhängt, die vom befragten Knoten ausgesendet wurde,

- diese Antwortnachricht bis zur Meisterstation (PC) über bereits in der Konfiguration berücksichtigte Knoten zu übertragen, wobei jeder dieser Knoten die Nachricht im allgemeinen über seinen unmittelbar hierarchisch übergeordneten Knoten weitersendet und dabei die Identität des befragten Knotens speichert, die aus der Identität der in dieser Antwortnachricht enthaltenen Ports abgeleitet wird, außer wenn diese Identität durch die erste Marke (p) ersetzt ist oder von der zweiten Marke (e) begleitet wird.

3.  Verfahren nach Anspruch 2, dadurch gekennzeichnet, daß zum Aussenden einer Antwortnachricht durch einen getesteten Knoten oder von einem bereits in der Konfiguration berücksichtigten Zwischenknoten gemäß der bestimmten hierarchischen Ordnung das Verfahren darin besteht,

- in den Speichern der Ports des getesteten Knotens bzw. des Zwischenknotens denjenigen Speicher zu suchen, der die dritte Marke (0) enthält, und daraus die Identität des Knotens abzuleiten, der unmittelbar hierarchisch übergeordnet ist,

- die Nachricht über den dem so bestimmten Speicher entsprechenden Port in Richtung zum unmittelbar hierarchisch übergeordneten Knoten wieder auszusenden.

4.  Verfahren nach Anspruch 2, dadurch gekennzeichnet, daß zum Aussenden einer Antwortnachricht durch den getesteten Knoten in Richtung auf die Meisterstation (PC) das Verfahren ausnahmsweise darin besteht, diese Nachricht an jeden hierarchisch übergeordneten Knoten mit Hilfe der dritten Marke (0) zu richten, und nicht nur den unmittelbar hierarchisch übergeordneten Knoten, wenn die Antwortnachricht die zweite Marke (e) enthält, die angibt, daß der befragte Knoten ein Knoten ist, der bereits in der Konfiguration berücksichtigt wurde.

5. Verfahren nach Anspruch 2, dadurch gekennzeichnet, daß jeder Port (a, b, c) jedes Knotens (3) durch eine Identität (3a, 3b, 3c) identifiziert wird, die die Identität (3) des Knotens enthält, zu dem dieser Port gehört, und daß zum aufeinanderfolgenden Testen jedes Ports in jedem Knoten des Netzes das Verfahren zuerst darin besteht, die Identität jedes Ports (2a, 2b, 2c) des Knotens (2) zu bestimmen, der mit der Meisterstation (PC) verbunden ist oder in sie integriert ist, und daß das Verfahren dann zum aufeinanderfolgenden Testen jedes Ports in jedem Knoten darin besteht:
- aus einem Speicher der Meisterstation (PC) die Identität (3a) eines zu testenden Ports in der Reihenfolge (3a, 3b, 3c) auszulesen, in der dort die Identitäten der Ports verzeichnet sind, wobei die Identitäten der Ports, die durch die erste Marke (p) ersetzt sind oder mit der zweiten Marke (e) versehen sind, zum Testen eines Ports nicht berücksichtigt werden,
- diesen Port (3a) zu testen, indem ihm eine Testnachricht zugesandt wird, die ihn auffordert, eine Fragenachricht an den Knoten zu richten, mit dem er zumindest über eine direkte Verbindung verknüpft ist,
- in diesem Speicher der Meisterstation (PC) jede Identität von Ports, die in der von dem getesteten Knoten gesendeten Antwortnachricht enthalten ist, ggf. mit den Marken (p, e) zu speichern.

6. Verfahren nach Anspruch 1, dadurch gekennzeichnet, daß es weiter darin besteht, den Zustand jeder Verbindung zu überwachen, und daß im Fall einer Unterbrechung einer Verbindung das Verfahren darin besteht, diesen Umstand der Meisterstation (PC) zu melden und die Konfiguration des Netzes neu zu bestimmen.

## Claims

1. A method of automatically determining the configuration of a network including a master station (PC) and a plurality of nodes (1 to 5), each node including at least one port (a, b, c) connected to at least one port of another node, a port of the master station being connected to a port (2c) of one of the nodes, or else the master station being integrated in one of the nodes, the method consisting in:
   successively testing each of the ports in all of the nodes, each port being tested once only;
   determining a hierarchical order of nodes, enabling messages to be routed from node to node along a determined route;
   the method being characterized in that in order to successively test each port, it consists in:
   sending a test message from the master station (PC) to said port;
- determining the identities of the nodes (3) which are connected directly to the port under test (2a);
- determining the identities (3a, 3b, 3c) of the ports possessed by said nodes;
   and in that in order to determine a hierarchical order for the nodes, it further consists in:
- sending a message from the node possessing the port under test towards the master station (PC), along the hierarchical order of the nodes that have already been determined, said message containing the identities of the nodes and the ports which have been determined while testing said port;
- memorizing said identities, firstly in the master station (PC), and secondly in the stations through which the message passes on its journey to the master station; and
- duducing therefrom, in each node (2 to 5), a tree-shaped subnetwork having the node (2) possessing the port under test (2a) as its root.

2. A method according to claim 1, characterized in that:
- if the port under test is the port receiving the test message, the method further consists in sending an answer message from the node possessing the port under test towards the master station (PC), said answer message containing a first marker ("p");
- if the port under test is not the port receiving the test message, the method further consists in:
   -- sending an interrogation message from the port under test (2a) towards an "interrogated" node (3) which is a node connected at least by one link going directly from the port under test to the interrogated node; the node (2) possessing the port under test (2a) being considered as the immediate hierarchical superior of the interrogated node (2) if the interrogated node has not already been taken into account in the configuration;

-- if the interrogated node (3) has already been taken into account in the configuration, issuing an answer message addressed to the node (2) possessing the port under test (2a), said message containing a second marker ("e") and the identity of the port (3a) that has received the interrogation message;

-- if the interrogated node has not already been taken into account in the configuration:

—starting a time-out in the interrogated node to indicate that the node (3) has been taken into account in the configuration;

—storing a third marker ("0") and the identity (2) of the node possessing the port under test (2a) in the interrogated node (3) in a memory belonging to the port (3a) that has received the interrogation message, to identify the port that leads to all the hierarchical superiors, and to store the identity of the immediate hierarchical superior of the interrogated node (3); and

—issuing an answer message from the interrogated node addressed to the node under test and containing the identity of each port of the interrogated node;

and in that, in any event, the method further consists in:

- routing the answer message from the interrogated node (3) to the node (2) possessing the port under test (2a) via possible intermediate nodes with each intermediate node relaying the answer message via the port from which it receives it;

- storing at least a part of the contents (3a, 3b, 3c) of the answer message from the interrogated node in a memory belonging to the port under test (2a) to identify the port (2a) which leads to the node under test (3);

- issuing an answer message from the node under test (3) addressed in general to the immediate hierarchical superior (2) of the node under test in order to cause the message to reach the master station (PC), the contents of said answer message being a function of the contents of the answer message issued by the interrogated node; and

- routing said answer message to the master station (PC) via nodes that have already been taken into account in the configuration, each of said nodes relaying the message by addressing it in general to the immediate hierarchical superior of the node and storing, on passing, the identity of the interrogated node as deduced from the identities of the ports contained in the answer message, except when said identity is replaced by the first marker ("p") or is accompanied by the second marker ("e").

3. A method according to claim 2, characterized in that to relay an answer message from a node under test or from an intermediate node that has already been taken into account in the configuration, in the determined hierarchical order, the method consists in:

- looking through the memories belonging to the ports of the node under test or the intermediate node as the case may be, to find the memory which contains the third marker (0), and deducing therefrom the identity of the node which is the immediate hierarchical superior; and

- relaying the message via the port corresponding to the memory discovered in this way, addressing the message to the node constituting the immediate hierarchical superior.

4. A method according to claim 2, characterized in that to relay an answer message from a node under test for the purpose of causing it to reach the master station (PC), the method consists exceptionally in addressing the message to any hierarchical superior using the third marker ("0") instead of addressing the message to the node which is the immediate hierarchical superior of the node under test, in the event that the answer message contains the second marker ("e") indicating that the interrogated node is a node that has already been taken into account in the configuration.

5. A method according to claim 2, characterized in that each port ($\underline{a}$, $\underline{b}$, $\underline{c}$) of each node (3) is identified by an identity ("3a, 3b, 3c") containing the identity ("3") of the node possessing the port; and

in that to test each port of each node of the network in succession, the method consists initially in determining the identity of each port ("2a, 2b, 2c") of the node (2) which is connected to the master station (PC) or which is integrated therewith, and in that it then consists, for successively each port of each node (3) in:

- reading in the memory of the master station (PC) the identity ("3a") of a port to be tested in the order (3a, 3b, 3c) in which the identities of the ports have been written therein, with port identities that have been replaced by the first marker ("p") or which are accompanied by the second marker ("e") not being taken into account when testing a port;

- testing said port (3a) by sending a test message thereto instructing the port to send an interrogation message to the node which is connected thereto at least via a direct link; and
- storing in said memory of the master station (PC) each port identity contained in the answer message sent by the node under test together with possible accompanying markers ("p", "e").

6. A method according to claim 1, characterized in that it further consists in monitoring the state of each link; and

in that if a link is interrupted, in indicating this fact to the master station (PC) and in redetermining the configuration of the network.

# FIG.1

# FIG.2

# FIG.3

# FIG.4

# FIG.5

# FIG.6

FIG.7

EP 0 515 253 B1

25